# FASCICULE DE BREVET EUROPEEN

(11) **EP 3 844 988 B1**
(45) Date de publication et mention de la délivrance du brevet: **13.03.2024**
(21) Numéro de dépôt: 19759407.0
(22) Date de dépôt: 31.08.2019
(51) Int. Cl.: H04M 1/72424, G08B 25/01, H04W 4/90

(54) **PROCÉDÉ DE TRANSMISSION D'UNE ALARME ÉLECTRONIQUE VIA UN TÉLÉPHONE INTELLIGENT, ET DISPOSITIF POUR METTRE EN OEUVRE LE PROCÉDÉ**
ÜBERTRAGUNGSVERFAHREN EINES ELEKTRONISCHEN ALARMS ÜBER EIN INTELLIGENTES TELEFON, UND VORRICHTUNG ZUR UMSETZUNG DIESES VERFAHRENS
METHOD FOR TRANSMITTING AN ELECTRONIC ALARM VIA A SMARTPHONE, AND DEVICE FOR IMPLEMENTING THE METHOD

(30) Priorité: 01.09.2018 EP 18192139
(43) Date de publication de la demande: 07.07.2021
(73) Titulaire: Dupre, Jean-Luc, 06160 Antibes Juan Les Pins (FR)
(72) Inventeur: DUPRE, Jean-Luc, 06160 Antibes Juan Les Pins (FR); DIMBINIAINA, Elkana Vinet, Toamasina ( Madagascar) (MG)
(74) Mandataire: Schuffenecker, Thierry
(86) Numéro de dépôt international: PCT/EP2019/073289
(87) Numéro de publication internationale: WO 2020/043920

(56) Documents cités:
- US-A1- 2007 139 182
- US-A1- 2012 002 791
- US-A1- 2012 295 575
- US-A1- 2014 349 603
- US-A1- 2015 288 797
- US-A1- 2017 162 032

## Description

### Domaine technique de l'invention

La présente invention concerne le domaine de la téléassistance et plus spécifiquement un procédé de transmission d'une alarme via un dispositif de traitement de données, tel qu'un téléphone intelligent.

### Etat de la technique

De multiples solutions existent sur le marché permettant à un utilisateur de générer une alarme électronique via un dispositif de traitement de données mobile, tel un téléphone intelligent/smartphone.

En général ces solutions consistent en une application présente sur le téléphone, par exemple de type Android ou iOs, permettant de générer et transmettre un message SMS d'alerte à un numéro d'abonné, voire une centrale de téléassistance. Les solutions conventionnelles les plus sophistiquées conduisent également à transmettre dans le SMS une information de géo-localisation permettant au secours de localiser rapidement la personne en danger.

US 2014/349603 décrit un téléphone cellulaire comprenant un processeur générant et envoyant un message d'alarme à destination d'au moins un destinataire prédéfini, en réponse à une action de génération automatique d'un message d'alerte par un téléphone portable à un ou plusieurs destinataires prédéterminés, le processus étant activé par une action unique de l'utilisateur. Un programme informatique détecte en arrière-plan un changement d'état d'au moins une interface homme-machine du téléphone correspondant à l'action unique d'activation, le changement d'état étant spécifique à une situation de panique associée à des paramètres préenregistrés. En cas de détection du changement d'état, l'envoi d'un message d'interruption du processeur et d'appel d'une routine déclenchant une application ordonnant l'envoi d'un message contenant des pré- paramètres enregistrés. Ce document ne décrit nullement le recours à un service de contrôle du microphone pour procéder, de manière périodique, à l'initialisation de celui-ci de manière à assurer, en toutes circonstances, le contrôle du canal audio. Il ne décrit pas non plus la captation de messages audio d'une durée ou longueur maximale prédéfinies qui sont comparées ensuite avec une bibliothèque de messages audio prédéfinies.

US 2012/295575 décrit un système de transmission de signaux d'urgence utilisant un téléphone mobile et un procédé associé utilisant un téléphone mobile. Même si l'utilisateur n'effectue pas séparément une opération de touche, les informations indiquant que l'utilisateur se trouve dans la situation d'urgence peuvent être transmises au téléphone mobile d'un tiers en déterminant si une voix préenregistrée est entrée. Il est prévu en outre une connexion d'appel avec des téléphones mobiles de tiers avec le téléphone mobile de l'utilisateur pour transmettre automatiquement des appels d'urgence.

US 2017/162032 décrit un système de sécurité personnel permettant à un utilisateur de demander de l'aide. L'utilisateur déclenche l'état de panique de l'appareil en interagissant avec l'appareil de manière particulière, dont certaines sont secrètes. Chaque interaction a une signification que l'appareil attribue une signification différente qui signifie que l'utilisateur a besoin d'aide. En état de panique, l'appareil peut envoyer une notification à un central de sécurité associé à l'appareil ; et l'appareil peut capturer des données (telles que des sons et des images) et envoyer ces données au central de sécurité. Le central de sécurité peut à son tour fournir une aide sur la base de ces informations. Comme précédemment, ce système ne prévoit pas le recours à un service de contrôle du microphone pour procéder, de manière périodique, à l'initialisation de ce dernier de manière à en assurer, en toutes circonstances, le contrôle du canal audio, ni la captation de messages audio d'une durée ou longueur maximale prédéfinies qui sont comparées ensuite avec une bibliothèque de messages audio prédéfinies.

US 2012/002791 décrit un système et un procédé pour fournir une ligne téléphonique d'un contact d'urgence en réponse à une urgence. Le système comprend un dispositif utilisateur et une base de données de surveillance qui communiquent entre eux sur Internet. Une pluralité de contacts et de méthodes de contact sont stockés dans la base de données de surveillance et sont hiérarchisées par priorité. Lorsque le dispositif utilisateur établit une condition d'urgence, il communique la condition d'urgence à la base de données de surveillance, qui établit alors une ligne d'assistance, similaire à une ligne de conférence téléphonique. Une fois cette ligne d'assistance établie, la base de données de surveillance envoie un message de notification de l'urgence aux contacts via une première méthode de contact. La base de données de surveillance envoie alors un autre message de notification via une seconde méthode de contact différente de la première méthode de contact à chacun des contacts qui n'ont pas répondu au premier message de notification.

US 2015/288797 décrit un système et un procédé informatisés permettant de détecter intuitivement le besoin d'un utilisateur en matière d'aide d'urgence, de soins préventifs et d'interventions médicales, ainsi que de coordonner les soins aux proches et aux animaux de l'utilisateur lorsque l'utilisateur est confronté à une situation d'urgence ou est décédé. La détection est effectuée via des équipements et des capteurs de laboratoire et de signes de vie, une demande de surveillance auto-initiée ou l'interrogation périodique de l'utilisateur du système par le biais d'une alerte, d'un appel téléphonique, d'une notification, d'un message texte ou d'autres moyens appropriés pour savoir s'ils sont en danger. L'interrogation et la surveillance automatisée peuvent également être déclenchées par des données médicales en temps réel transmises par voie électronique ou sans fil au système. Si l'utilisateur ne répond pas, le système appelle automatiquement soit les contacts de l'utilisateur (par priorité répertoriée) pour les avertir d'une urgence potentielle, soit les intervenants d'urgence directement en fonction de la gravité de l'urgence et leur communique des informations critiques ainsi qu'un code pour accéder aux informations de l'utilisateur. dossiers médicaux).

US 2007/139182 décrit des systèmes et procédés de communication interactive bidirectionnelle concernant des notifications et des réponses d'urgence pour des environnements mobiles. Une zone géographique spécifique est désignée pour des communications d'urgence sélectives. Les communications d'urgence peuvent comprendre du texte, de l'audio, de la vidéo et d'autres types de données. La notification d'urgence est envoyée aux appareils de communication mobiles des utilisateurs tels que les unités télématiques embarquées, les téléphones cellulaires, les assistants numériques personnels (PDA), les ordinateurs portables, etc. qui sont actuellement situés dans la zone désignée. L'expéditeur du message d'urgence ou le ou les fournisseurs de services des utilisateurs peuvent contrôler à distance des caméras et des microphones associés aux dispositifs de communication mobiles des utilisateurs. Par exemple, une caméra arrière habituellement utilisée lors de la conduite en marche arrière peut être utilisée pour capturer des images et des vidéos qui peuvent aider les autorités à rechercher un suspect. Les véhicules des utilisateurs peuvent envoyer des photos ou des flux vidéo d'individus, de voitures et de plaques d'immatriculation à proximité, ainsi que des informations de localisation en temps réel, en réponse à la notification d'urgence. Des algorithmes de reconnaissance d'images peuvent être utilisés pour analyser les plaques d'immatriculation, les véhicules et les visages capturés par les caméras des utilisateurs et déterminer s'ils correspondent à la description d'un suspect.

Ces solutions sont éminemment utiles, notamment dans certains pays dans lesquels la sécurité des biens et des personnes n'est pas assurée.

Cependant, aucune d'entre elle ne décrit le recours à un service de contrôle du microphone pour procéder, de manière périodique, à l'initialisation de ce dernier de manière à en assurer, en toutes circonstances, le contrôle du canal audio. Il ne décrit pas non plus la captation de messages audio d'une durée ou longueur maximale prédéfinies qui sont comparées ensuite avec une bibliothèque de messages audio prédéfinies.

Il reste cependant souhaitable de pouvoir bénéficier d'une solution globale et complète, intégrant la grande diversité et la multiplicité des informations susceptibles d'être collectées par un téléphone mobile intelligent pour accroitre significativement la sécurité des individus, et ce, quel que soit, la marque, le type et la nature de du système d'exploitation dudit téléphone.

Tel est le problème technique à résoudre par la présente invention.

### Exposé de l'invention

La présente invention a pour but d'intégrer la sécurité au coeur de l'activité quotidienne des utilisateurs de téléphones mobiles et intelligents, en proposant un procédé permettant de collecter et rassembler une diversité d'informations diverses en vue de détecter et réagir à diverses situations de risques pour la sécurité physique de l'utilisateur, et par le déclenchement automatique d'une alerte sur un téléphone mobile, comportant la génération et la transmission simultanées d'un appel téléphonique, d'un message électronique et un email à une centrale de téléassistance ou à un proche de l'utilisateur.

Un autre but de la présente invention consiste à fournir un procédé d'alerte sur un téléphone mobile et de génération et transmission d'un message intégrant la géolocalisation de l'utilisateur en détresse.

C'est un autre but de la présente invention que de fournir un procédé de déclenchement d'une alerte sur un téléphone mobile et de génération et transmission d'un message électronique sur la base d'une commande vocale.

C'est un autre but de la présente invention que de fournir un procédé d'alerte sur un téléphone mobile intelligent sur la base d'une commande tactile sur l'écran ou sur la touche 'Volume'.

C'est un autre but de la présente invention que de fournir un procédé d'analyse contextuelle d'une situation de danger ou risque pour un utilisateur du téléphone, et de déclenchement d'une alerte en cas de risque excessif.

C'est un autre but de la présente invention que de fournir un procédé d'alerte sur un téléphone mobile et de génération et transmission d'un message électronique intégrant la dimension d'*identification non contestable* de l'utilisateur en détresse par les divers procédés de reconnaissance faciale/digitale

Un autre but de la présente invention consiste à fournir un procédé d'alerte sur un téléphone mobile et de génération et transmission d'un message électronique intégrant le principe central de confidentialité des informations recueillies et traitées *uniquement* dans le téléphone mobile et sur la base d'un cryptage à 1024 bits

C'est un autre but de la présente invention que de fournir un procédé pour l'envoi d'un SMS même en l'absence de réseau et de transformer un téléphone intelligent conventionnel en un véritable « assistant de sécurité » pour un utilisateur.

C'est un autre but de la présente invention que de fournir un procédé pour l'envoi d'un message vocal robotisé lorsque l'utilisateur se trouve dans l'impossibilité de parler pour transmettre son identité et les informations de géolocalisation transmises également par SMS, et ce, même hors réseau.

C'est un autre but de la présente invention que de fournir un procédé de traduction vocale automatique instantanée permettant à l'utilisateur de l'application de pouvoir dialoguer dans sa langue natale avec un interlocuteur parlant dans une autre langue.

L'invention est définie par les revendications indépendantes annexées et d'autres modes de réalisation sont décrits par les revendications dépendantes.

### Description des dessins

D'autres caractéristiques, buts et avantages de l'invention apparaîtront à la lecture de la description et des dessins ci-après, donnés uniquement à titre d'exemples non limitatifs. Sur les dessins annexés :
La figure 1 illustre une vue générale montrant un téléphone mobile communiquant via une station de base au sein d'un réseau cellulaire, et recevant également des informations de géo-localisation d'un satellite.
La figure 2 représente les blocs fonctionnels coopérant dans le téléphone mobile et/ou intelligent suivant un mode de réalisation préféré de l'invention.
La figure 3 illustre un mode de réalisation d'un procédé d'analyse contextuelle permettant la détection d'une situation critique, dans diverses situations et contextes donnés.
La figure 4 illustre plus spécifiquement le procédé de traitement d'une situation critique, mis en oeuvre suite à une détection issue du procédé de la figure 3.
La figure 5 illustre un mode de réalisation spécifique du procédé d'analyse contextuelle de l'étape 360.
La figure 6 illustre un mode de réalisation spécifique d'un processus global d'un message vocal robotisé.
La figure 7 illustre un mode de réalisation particulier d'un processus global de traduction vocale instantanée.
La figure 8 illustre un autre mode de réalisation d'un procédé de commande pour un déclenchement d'alerte.
La figure 9 illustre un exemple d'un procédé de localisation GPS dans une situation hors réseau.

### Description des modes de réalisation préférée

Le lecteur notera une observation importante, à savoir que l'application est conçue comme une application système native en s'intégrant directement sur le système d'exploitation du téléphone intelligent et contrôlant les différents capteurs installés et en traitant sans filtre intermédiaire, les informations reçues de ces capteurs. L'application est donc totalement indépendante du système d'exploitation installé et cette conception lui confère la possibilité d'être proposée directement à un fabricant de téléphone intelligent comme une fonctionnalité primaire d'un téléphone intelligent.

### Définitions

### 1. Téléphone intelligent :

Dans le texte ci-après, est désigné sous le terme "téléphone intelligent" tout dispositif mobile ou fixe de télécommunications intégrant les fonctionnalités suivantes :
- L'envoi/réception d'appel téléphonique
- L'envoi/réception de SMS et/ou MMS
- La prise de photo par un appareil photo intégré ou non
- La détection ou l'enregistrement de sons par un microphone intégré ou non
- La géolocalisation dudit dispositif
- La détection du mouvement ou du déplacement dudit dispositif

### 2. Alerte/Alarme :

Dans le texte ci-après, est désigné sous les termes "Alerte ou Alarme" une communication électronique prioritaire, vers un récepteur identifié, individu ou structure organisée pour la réception d'appels d'urgence, telle qu'une centrale de téléassistance ou de télésurveillance, générée par un traitement de données externes ou internes recueillies par un téléphone intelligent et constituée :
- D'un appel téléphonique automatiquement sans intervention du porteur du téléphone
- De l'envoi d'un SMS comportant :
   ∘ des éléments de géolocalisation et d'identification dudit téléphone
   ∘ des éléments d'identification du porteur dudit téléphone
   ∘ des éléments exposant la situation du porteur dudit téléphone
- De l'envoi d'un email comportant :
   ∘ des éléments de géolocalisation et d'identification dudit téléphone
   ∘ des éléments d'identification du porteur dudit téléphone
   ∘ des éléments exposant la situation du porteur dudit téléphone

**NOTA :** dans la circonstance particulière ou aucun réseau n'est accessible, l'alerte est constituée :
- De l'envoi d'un SMS comportant :
   ∘ des éléments de géolocalisation et d'identification dudit téléphone
   ∘ des éléments d'identification du porteur dudit téléphone
   ∘ des éléments exposant la situation du porteur dudit téléphone

### 3. Géolocalisation GPS :

Dans le texte ci-après, est désigné sous les termes "Géolocalisation GPS ou localisation GPS", une information indiquant la position d'un téléphone intelligent et par conséquent de son utilisateur, par un procédé permettant de positionner ledit téléphone à l'aide de ses coordonnées géographiques et ce, grâce à un système de positionnement par satellites. L'expression 'Géolocalisation GPS ou localisation GPS" citée supra et dans la suite du présent document couvre de manière générique tous les systèmes positionnement par satellites tels le GPS américain - Global Positioning System), le GLONAS russe, l'européen Galiléo, le BEIDOU-2 chinois, et les futurs QZSS japonais et l'IRNSS indien et tout autre système à venir. Ce qui caractérise le système universel de la présente application.

### 4. Système d'exploitation (Operating system dans la littérature anglo-saxonne) :

Dans le texte ci-après, est désigné sous le terme de système d'exploitation, le programme exécuté lors de la mise en marche du téléphone intelligent et servant d'intermédiaire entre les logiciels et le matériel informatique, dans le cas présent, ledit téléphone intelligent. Dans le texte du présent document, il est entendu que l'application est conçue en tant qu'application système pour être adaptable sur tous les systèmes d'exploitation tels que Android, iOs, Windows Phone, Symbian, Harmony Os et autres systèmes d'exploitation à venir, soulignant ainsi le caractère universel de la présente application.

### 5. Bip SOS ou Bip SOS digital :

Pour des commodités de lecture, l'application, objet de l'invention présentée ci-dessous, peut être désignée sous les termes suivants :
- Bip SOS
- Bip SOS digital
- L'application

### 6. Alerte ou commande vocale :

Les termes "alerte vocale" et "commande vocale" utilisés dans le texte ci-dessous décrivent, de façon générique, le mot, l'expression ou la phrase définies pour déclencher une alarme par la voix.

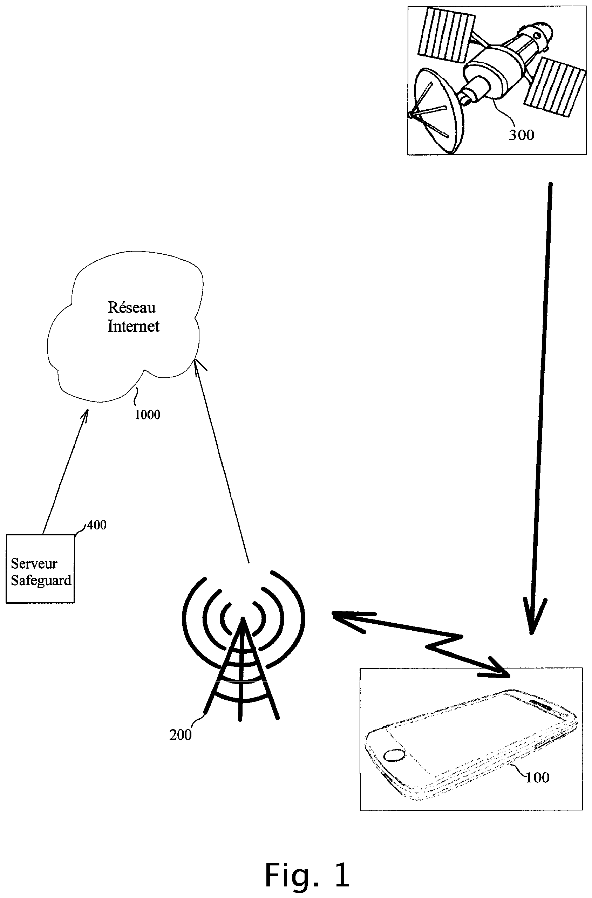

La **figure 1** illustre l'architecture générale d'un mode de réalisation préféré de l'invention, qui se compose d'un dispositif mobile de traitement de données, tel qu'un téléphone intelligent 100, de type *iPhone* (marque déposée par la société Apple Computer Inc.) ou Android par exemple, permettant une communication sans fil au sein d'un réseau cellulaire de type GSM , représentée par une station de base 200 assurant une communication voix et données, ainsi qu'un accès à un réseau Internet 1000 et, par suite, à un ou plusieurs serveurs dont un serveur 500 de téléassistance qui sera mis en oeuvre dans les procédures que l'on décrira ci-après plus en détail. Par ailleurs, le téléphone mobile 100 reçoit des signaux de géolocalisation émanant d'un ensemble de satellites - tel le satellite 300 illustré sur la figure 1 - via un récepteur GPS inclut dans le téléphone.

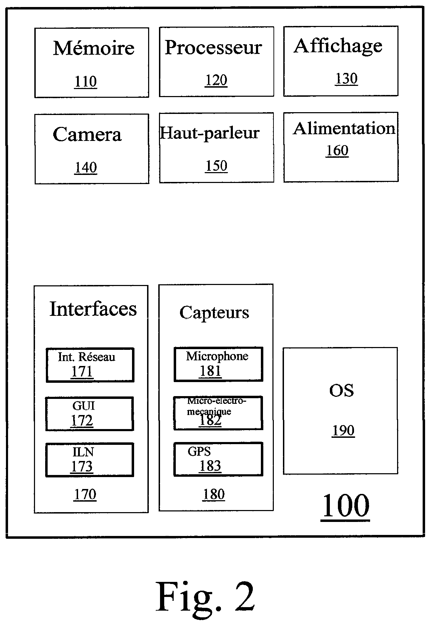

La **figure 2** illustre plus spécifiquement l'architecture générale du téléphone intelligent 100 de la figure 1.

Le téléphone 100 comporte une mémoire 110 distribuée en un ou plusieurs composants électroniques et permettant le stockage de programmes informatiques et de données, dont un système d'exploitation ainsi que diverses applications. Le téléphone comporte ensuite un processeur 120 permettant l'exécution des applications et le traitement de données, ainsi qu'un affichage 130 - en général tactile - permettant d'afficher les données à un utilisateur via à une Interface graphique (*Graphical User Interface* selon la littérature anglo-saxonne). Le téléphone 100 comporte un appareil photo 140 destiné à la prise de vues 140, un haut-parleur 150 associé à son circuit amplificateur, ainsi qu'une alimentation électrique 160.

Le téléphone 100 comporte en outre un bloc 170 comprenant diverses interfaces, en particulier une interface réseaux 171 permettant une communication sans fil avec divers réseaux GSM, WIFI, Bluetooth etc... pour un accès au réseau Internet, mais également à un réseau LAN (*Local area Network*), WAN (*Wide area Network*) etc.. bien connus d'un homme du métier et qu'il n'est pas nécessaire de décrire plus avant. Le bloc d'interfaces 170 comporte également une interface graphique utilisateur GUI 172 évoquée précédemment, voire également une interface de langage naturelle ILN 173 susceptible de reconnaître des instructions vocales reçues d'un utilisateur.

Le téléphone 100 comporte ensuite un bloc 180 comportant de multiples capteurs permettant de générer de multiples informations et signaux représentatifs de l'environnement d'un utilisateur. Plus spécifiquement, le bloc 180 comporte un microphone audio 181, un capteur micro-électromécanique 182 tel qu'un accéléromètre par exemple, un capteur optique, un capteur d'identification RFID, un capteur GPS 183 (*Global Positionning System*) pour la réception des signaux de géolocalisation émis par les satellites géostationnaires, mais également un compas intégré, un gyroscope etc...

Comme on le verra ci-après plus en détail, un des apports significatifs de l'invention consiste à mettre à contribution toutes les informations susceptibles d'être collectées par les nombreux capteurs et interfaces réseaux, pour rassembler un ensemble de données permettant d'effectuer une analyse contextuelle utile pour déterminer les conditions de sécurité de l'utilisateur du téléphone.

En référence encore à la figure 2, on voit que la mémoire 110 du téléphone 100 est destinée à recevoir, outre des données produites par les différents capteurs et/ou reçues des différentes interfaces, un ensemble de programmes et logiciels permettant le fonctionnement du logiciel pour la gestion des appels et l'accès à Internet, et également la mise en oeuvre des procédés décrits ci-après. Parmi ces programmes figure bien naturellement un système d'exploitation (OS) 190 assurant le contrôle général du fonctionnement du téléphone 100, qui pourra être par exemple de type ANDROID.

Outre le système d'exploitation, la mémoire 110 sera utilisée pour stocker une application spécifique conforme à la présente invention, que l'on décrit ci-après en détail, et qui permettra d'intégrer la sécurité au coeur de l'activité quotidienne de l'utilisateur du téléphone.

D'une manière générale, cette application spécifique pourra être téléchargée de manière conventionnelle depuis un serveur de téléchargement (non illustré), bien connu d'un homme du métier.

Une fois téléchargée, cette application va, comme on va le voir en détail, configurer le téléphone intelligent pour lui permettre de mettre en place une sécurité « contextuelle » destinée à accroître les conditions de sécurité de l'utilisateur du téléphone intelligent.

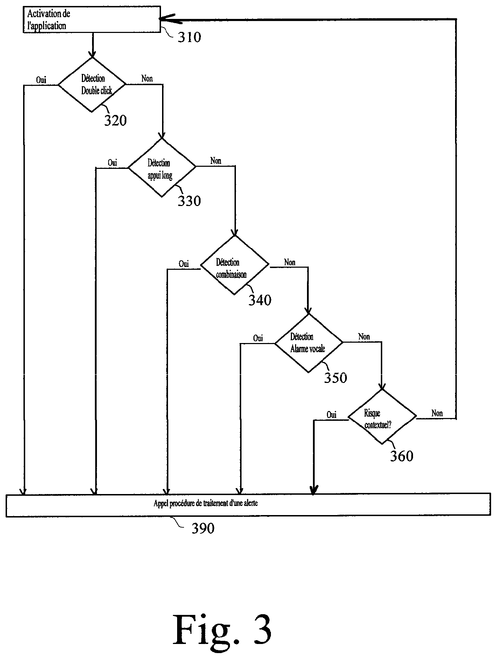

**La** **figure 3** décrit plus spécifiquement un exemple d'un procédé d'analyse contextuelle conforme à la présente invention permettant d'effectuer une analyse fine des conditions de sécurité d'un utilisateur en vue de détecter une situation critique pour ce dernier, dans le but de générer une alerte à transmettre par le téléphone.

Le procédé de la figure 3 démarre avec une étape 310 qui correspond au lancement d'une application spécifique, organisant la gestion de la sécurité physique de l'utilisateur, et qui permettra la mise en oeuvre des diverses procédures décrites ci-après.

Typiquement, l'étape 310 est une modalité avantageuse pour l'utilisateur qui veut rester maître du fonctionnement de son téléphone et qui veut garder le contrôle de ce dernier.

Alternativement, suivant un autre mode de réalisation, un homme du métier pourra implémenter certaines des étapes de procédé décrites ci-après sous forme de « service » pour assurer l'exécution des routines décrites ci-après en toile de fond du fonctionnement quotidien du téléphone intelligent. En effet, comme cela est connu d'un homme du métier, un « service » est classiquement considéré, à l'opposé d'une « activité », comme pouvant fonctionner en arrière-plan du téléphone mobile, et ce sans recourir à une interface graphique.

Dans un mode de réalisation préféré, le lancement de l'application de sécurité conduit à l'affichage d'un bouton spécifique dans une zone spécifique de l'écran, apparaissant en clair ou en surimpression par rapport aux autres applications affichées et qui permettra à l'utilisateur de garder, avantageusement, une possibilité d'action directe sur le mobile.

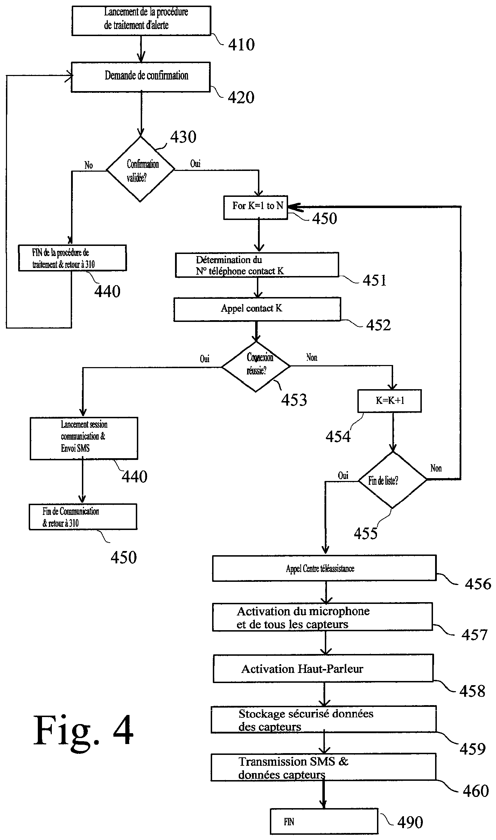

Dans une étape 320, le procédé effectue un test pour déterminer si l'utilisateur effectue un « *double clic* » - ou un appui court (par exemple d'une durée égale à +ou - 5 secondes) sur l'écran tactile du téléphone intelligent, en particulier sur la zone réservée à cet endroit. Cette étape permet clairement à l'utilisateur, qui exerce son libre-arbitre, de déterminer lui-même s'il se trouve dans une situation critique susceptible d'appeler le besoin d'un traitement adéquat, comme cela qui sera illustré dans la figure 4. Bien évidemment, un homme du métier pourra recourir à d'autres possibilités, comme par exemple la détection d'un double clic ou d'un appui long sur un bouton spécifique du téléphone, originellement alloué à une autre fonction.

Dans un mode de réalisation particulier, lorsque le téléphone mobile est doté d'un dispositif de capture d'empreinte digitale, le procédé conduit, lors de la détection d'un appui court, à la capture simultanée de l'empreinte digitale de l'utilisateur.

En cas de détection d'un « *double clic* », le procédé passe alors à une étape 390 qui permettra l'appel à la procédure de traitement d'une alerte qui sera décrite en relation avec la figure 4.

Si le texte de l'étape 320 ne permet pas d'établir un « *double-clic* », alors le procédé va à une étape 330 visant à détecter un « *appui long* » - par exemple d'au moins 3 secondes - effectué par l'utilisateur sur une zone spécifique ou non de l'écran tactile du téléphone intelligent 100. Comme précédemment, si le mobile est équipé d'un dispositif de capture d'empreintes digitales, le procédé pourra avantageusement procéder à l'enregistrement de cette empreinte digitale pour permettre de confirmer, ultérieurement, l'identité de la personne qui a procédé à l'appui long.

En cas de détection d'un « *appui long* », le procédé passe à l'étape 390 et, dans le cas contraire, le procédé poursuit avec une étape 340 optionnelle visant à détecter une combinaison spécifique d'appuis « court » et « long » effectué par l'utilisateur sur une zone quelconque de l'écran tactile du téléphone intelligent 100.

Ainsi, comme on le voit, la combinaison des étapes 320, 330 et 340 permet de multiples modalités de détection d'alerte, basées sur le « double clic » et « l'appui long » permettant de distinguer deux cas spécifiques d'alerte, mais également toute combinaison quelconque. Par exemple, l'appui long pourra être plus spécifiquement utile lorsque le procédé de détection de la figure 3 se déroule en arrière-plan, tandis que le double clic sera avantageux lorsque l'application affichera une fenêtre ou un bouton d'activation. Dans le cas très général d'une combinaison de d'appuis « courts » et « longs », cela permettra à l'utiliser de commander d'une manière sûre le déclenchement d'une alerte en effectuant la combinaison spécifique de clics préétablie. Par exemple la combinaison successive de trois (appuis courts », suivis de « trois appuis longs » et suivis de « trois appuis courts », correspondra au message d'alerte bien connu S.O.S., lequel déclenchera la mise en oeuvre immédiate du procédé de traitement d'alertes de la figure 4.

Si le test de l'étape 340 conduit à la détection d'une combinaison d'appuis spécifique, le procédé passe à l'étape 390 et, dans le cas contraire, le procédé poursuit avec une étape 350 consistant en une détection d'une alarme vocale prononcée par l'utilisateur et détectée par le microphone du téléphone mobile.

En effet, si, comme on le voit, le procédé de la figure 3 permet une grande flexibilité liée aux modalités diverses de déclencher une alerte sur le téléphone via l'appui « tactile », le procédé de la figure 3 offre deux modalités supplémentaires du plus grand intérêt, à savoir une détection vocale en relation avec l'étape 350 et une analyse contextuelle en relation avec l'étape 360.

La détection vocale de l'étape 350 vise à détecter soit un ou plusieurs vocables ou ensemble de phonèmes prédéterminés (comme « *Alerte* », « *Au secours* ») , soit des messages audio préalablement enregistrés par un utilisateur et stockés dans la mémoire 110 du téléphone mobile.

Dans un mode de réalisation préféré, cette étape 350 utilise un « service » spécifique permettant le contrôle du microphone 181, et ce même si le téléphone est verrouillé.

Plus spécifiquement encore, le téléphone mobile pourra être configuré pour effectuer une reconnaissance de l'empreinte vocale de l'utilisateur, de manière à comparer cette empreinte avec une empreinte préalablement stockée dans la mémoire du téléphone et de valider ainsi l'alerte vocale prononcée par l'utilisateur.

Le mode de reconnaissance de l'empreinte vocale est universel et s'applique à toutes les langues, idiomes et accents des sociétés humaines mais peut s'appliquer également au traitement de sons produits par des animaux, des machines et autres productions sonores artificiels.

Plus spécifiquement encore, dans le cas d'une capture « vidéo » ou « photographique », le téléphone mobile pourra être configuré pour venir comparer la capture avec une image préalablement stockée au sein du téléphone pour, le cas échéant, valider l'alerte vocale prononcée par l'utilisateur.

Comme cela est connu d'un homme du métier, il existe trois types de services :
- le service local (désignés par les appellations « *started* » ou « *unbound* » dans la littérature anglo-saxonne) où l'activité qui lance le service et le service en lui-même appartiennent à la même application.
- le service distant, ie lancé par un composant qui appartient à une autre application ( désigné par l'appellation anglo-saxonne *boundservice*)*.* Dans ce cas de figure, il existe toujours une interface qui permet la communication entre le processus qui a appelé le service et le processus dans lequel s'exécute le service.
- le service qui emprunte aux deux statuts à la fois. Ainsi, on peut lancer un service local et lui permettre d'accepter les connexions distantes par la suite.

Dans le mode de réalisation préféré, le contrôle du microphone est réalisé au moyen d'un service de type « *unbound* », désigné « *service speech* », SS. Le service SS est un service local indépendant pour la prise de contrôle du micro physique d'un téléphone intelligent afin d'en récupérer des résultats d'écoute de façon permanente. C'est-à-dire de façon continue et non intermittente. Dans un mode de réalisation préféré, le SS procède à des enregistrements audios successifs d'une période donnée, par exemple 5 secondes. Selon l'invention actuelle, pour Pour assurer un contrôle constant du microphone 181, l'initialisation de celui-ci est réeffectuée à intervalle régulier, par exemple toutes les 5 secondes.

Plus spécifiquement, le fonctionnement du service SS est le suivant :
- prise de contrôle de son microphone
- Initialisation du *package speech* : appel à plusieurs classes en interne du service *unbound* pour pouvoir traiter les données d'écoute :
   *o Class initialisation* : démarrage de l'écoute
   o *Class exception* : récupération des différentes erreurs possibles durant l'écoute
   o *Class library* : récupération des dictionnaires de comparaison
   o Class speech : traitement des résultats entendu pas le micro par rapport au dictionnaire de comparaison
- Ecoute durant 5 secondes, traitement, comparaison et renvoi du résultat vers l'application.
- Redémarrage de l'écoute.

### Classes :

- *Initialisation* : La classe *initialisation* récupère les pilotes nécessaires au lancement d'écoute du micro, les packages diffèrent selon le téléphone utilisé mais le processus reste le même. Après récupération des pilotes, cette classe pointe le microphone du téléphone vers le service SS afin d'en récupérer les données enregistrées.
- *Exception* : La classe *exception* gère les différentes erreurs liées à l'écoute du microphone du téléphone mobile. En effet, plusieurs types d'erreurs sont à gérer durant l'écoute du micro, cette classe gère donc ses différentes exceptions pour ne pas faire bloquer le service et ainsi ne pas détruire le service d'écoute.
- *Library* : La classe library est une classe dans laquelle sont stockées toutes les différentes constantes de traitement des données d'écoute de l'application. Par défaut, la principale constante retenue parmi d'autres de cette librairie est le terme "AU SECOURS", qui est stocké dans plusieurs modes de prononciation, afin d'être sûr d'être reconnu par le service à tout moment d'écoute via le microphone, dans toutes les langues

- *Speech* : La classe *speech* est la classe qui utilise toutes les autres différentes classes du service. Elle lance l'initialisation, les exceptions et récupère les librairies. Lors d'une écoute, la classes speech récupère les données enregistrées par le microphone du téléphone intelligent et stocke ces données dans une variable temporaire de type de tableau ; ce tableau sera donc comparé par rapport à la librairie, et à chaque résultat, positif ou négatif, ce résultat sera renvoyé dans l'application de sécurité, pour déterminer si c'est une alarme ou non. Le redémarrage de l'écoute se fait aussi dans la classe *speech,* en faisant appel, après la comparaison des résultats, à la classe d'initialisation, pour éviter un phénomène d'étranglement de données, désigné par *throttling dans la littérature anglo-saxonne.*

Ainsi, grâce à la mise en oeuvre du service SS, le procédé permet de détecter, dans l'étape 350, une alerte vocale formulée par l'utilisateur. Si le test de l'étape 340 conduit à la détection d'une combinaison d'appuis spécifique, le procédé passe à l'étape 390 et, dans le cas contraire, le procédé poursuit avec une étape optionnelle supplémentaire 360.

L'étape 360 vient compléter l'analyse des conditions de sécurité effectuée par le téléphone mobile, opérant en un véritable « garde du corps digital » , de manière à conduire une analyse contextuelle effectuée par l'application - ou le service le cas échéant - permettant de mener une analyse fine de l'environnement dans lequel se trouve plongé l'utilisateur du téléphone dans le but de déterminer une situation de risque contextuel excessif, et de lancer une alerte appropriée.

Pour la mise en oeuvre de l'étape 360, le téléphone est configuré pour exploiter de multiples paramètres, données et informations émanant des différents capteurs présents dans le téléphone et configurés de manière à déterminer un risque conceptuel pertinent susceptible d'être pris en considération et de conduire à un test positif pour cette étape 360.

D'une manière générale, toutes les informations collectées par les capteurs présents dans le téléphone sont collectées et utilisées pour inférer une évaluation des conditions de sécurité dans lesquelles se trouve plongé l'utilisateur du téléphone mobile.

Suivant un mode de réalisation, les données produites par les capteurs électromécaniques sont prises en considération, et notamment celles émanant de l'accéléromètre et/ou le gyroscope pour détecter les conditions d'un choc ou d'une chute de l'utilisateur susceptible d'appeler le recours à une alerte de téléassistance. Plus spécifiquement, et cela est un avantage considérable résultant de cette analyse contextuelle, le téléphone mobile est configuré pour détecter, grâce à la diversité des capteurs mis en oeuvre, un choc horizontal provenant d'une collision avec un véhicule, par exemple, d'un choc vertical résultant d'une chute de l'utilisateur. Grâce à cette distinction, permise par l'utilisation collective des informations des capteurs, le procédé de traitement de l'alerte pourra traiter de manière différenciée la situation critique détectée et permettre, par exemple dans le cas d'un choc, horizontal ou vertical, mettre en oeuvre une mesure circonstanciée.

Suivant un autre mode de réalisation, l'application sera configurée pour exploiter des informations générales, telle que l'heure ou les données de géolocalisation provenant du capteur GPS 183, pour déterminer la présence de l'utilisateur dans un environnement potentiellement « à risque ». Ainsi un utilisateur pratiquant le jogging à bordure ou plongé dans une forêt quelque peu isolée pourra être détecté comme se trouvant dans une situation à risque, ce qui sera détecté par le téléphone comme étant susceptible de lancer le procédé de traitement de la figure 4.

Par ailleurs, les informations fournies par les interfaces et notamment l'interface réseaux pourra être utilisée pour venir compléter les informations collectées par les capteurs et intégrées dans le procédé d'analyse contextuelle de l'étape 360. En particulier, l'interface GSM donnera une indication utile quant à la présence du réseau cellulaire et des possibilités de communication. Plus particulièrement, l'application sera configurée pour exploiter l'un des signaux suivants provenant de l'interface réseaux : le rapport signal sur bruit, SNR ; un rapport signal sur brouillage plus bruit, SINR ; une puissance de réception du signal de référence, RSRP ; une qualité de signal de référence reçue, RSRQ ; une qualité de liaison radio, RLQ; une indication de la force du signal reçu, RSSI; et un indicateur de qualité de canal, CQI. Toutes ces informations permettent au téléphone mobile de connaître précisément les conditions de communication au sein du réseau cellulaire, en particulier si une station de base est en passe d'être trop éloignée sans qu'une seconde station ne puisse prendre le relais, et l'application spécifique permet de configurer le téléphone mobile pour venir utiliser ces informations et enrichir l'analyse contextuelle de l'étape 360 par ces indicateurs relatifs à la qualité de la communication. Clairement tous ces indicateurs permettront de détecter une situation anormalement risquée, par exemple, comme la situation d'un utilisateur qui pratique son jogging et qui arrive dans une situation d'éloignement d'une station de base d'un réseau cellule. Dans ce cas, cette situation sera détectée et pressentie dans l'étape 360 comme problématique dans la mesure où une communication GSM risque ne pas pouvoir aboutir.

Plus généralement, tous les capteurs figurant dans le bloc 180 du téléphone 100 sont appelés à mettre en contribution leurs données pour permettre, le cas échéant, une détection d'une situation à risque et, par conséquent, un test positif pour l'étape 360, auquel cas le procédé poursuit avec une étape 390 visant à traiter une alerte de sécurité. Dans le cas contraire, le procédé retourne à l'étape 310.

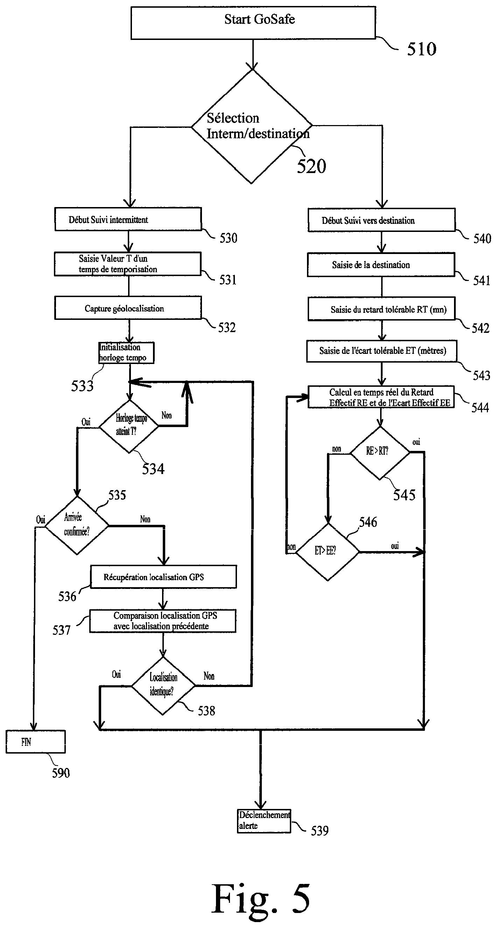

Pour montrer la grande généralité de cette analyse contextuelle, on décrira plus en détail avec la figure 5, des modalités particulières (GO SAFE et HOME) d'une analyse contextuelle des conditions de sécurité.

Comme on le voit avec l'exposé qui précède le procédé de la figure 3 permet les conditions d'un environnement de grande vigilance offrant à l'utilisateur des moyens de se confronter à diverses situations de risques pour sa sécurité physique.

L'on décrit à présent, en relation avec la figure 4, le procédé de traitement d'une alerte de situation critique, qui démarre par une étape 410.

Puis, dans une étape 420, optionnellement, le procédé poursuit par une demande de confirmation qui pourra être, selon le cas, exprimée par un message vocal ou par un affichage sur l'écran. Il est clair qu'un homme de métier pourra adapter cette étape 420 aux conditions et circonstances spécifiques qui ont menée à la détection de l'alerte. Ainsi, dans le cas d'une détection d'une combinaison de trois appuis courts, puis longs, puis courts, le procédé pourra être configuré pour passer directement cette étape 420 dans la mesure où le message de l'utilisateur ne souffre aucune ambiguïté... La même observation vaudra sans doute pour un « double clic » qui pourra être considéré comme étant une instruction non ambigüe de poursuivre le traitement d'alerte. Dans d'autres circonstances, notamment lorsque c'est le bloc d'analyse contextuelle de l'étape 360 qui a mené au procédé de traitement d'alerte, la demande de confirmation pourra être utile pour confirmer l'opportunité de poursuivre le traitement.

Dans une étape 430, le procédé effectue un test pour déterminer si la confirmation est validée par l'utilisateur, auquel cas le procédé poursuit avec une étape 450. Si la confirmation n'est pas validée, alors le procédé poursuit avec une étape 440 qui est est la fin de la procédure de traitement d'alerte et le retour à l'étape 310 de la figure 3.

L'étape 450 correspond à l'initialisation d'une boucle itérative FOR permettant de tester une liste de numéros de N contacts préalablement enregistrés dans l'application.

Dans une étape 451, l'application détermine le numéro de téléphone du contact K (avec K = 1 à N) puis, dans une étape 452, l'application tente un premier appel au contact K en vue d'une connexion vocale.

Dans une étape 453, le procédé teste si la connexion avec le contact K aboutit, auquel cas le procédé poursuit avec une étape 440, permettant le lancement de la session de communication, accompagnée, en parallèle, d'une transmission d'un SMS (*Short Message Service*) comportant les informations de géolocalisation de l'utilisateur, mais également, en option, un fichier XML (*eXtended Mark-Up Language*) comportant des données émanant des capteurs du téléphone. Puis, en fin de communication, le procédé poursuit avec une étape 450 constatant la fin de la communication et le retour ensuite à l'étape 310 de la figure 3.

Si la connexion avec le contact K n'aboutit pas dans l'étape 453, alors le procédé va à une étape 454 visant à incrémenter la variable K en vue de tester le contact suivant sur la liste des N contacts.

Dans une étape 455, le procédé teste si l'on arrive en fin de liste. Si l'on n'est pas en fin de liste, le procédé retourne à l'étape 450 dans le but de tester un autre contact au sein de la liste prédéterminée.

Si le test de l'étape 455 aboutit à un résultat positif, le procédé poursuit alors par une étape 456 visant à lancer un appel à un Centre de téléassistance, qui pourra être concrétisé par un centre d'appel téléphonique spécialisé, mais également un serveur tel que le serveur 400 de la figure 1.

Alternativement, le procédé pourra être configuré pour lancer immédiatement, et simultanément avec l'étape 450, l'appel au centre de téléassistance qui présentera alors l'avantage d'accélérer le traitement de l'alerte et d'assurer, notamment, la sécurité des informations transmises au centre d'alerte et leur enregistrement pour leur utilisation ultérieure.

Dans une étape 457, le procédé procède à l'activation du microphone audio et également de tous les capteurs du bloc 180 afin de permettre non seulement l'enregistrement audio de l'environnement du téléphone mais également la collecte de toutes les informations générées par ces capteurs. Dans un mode de réalisation particulier, le procédé configurera le téléphone mobile pour lancer également une capture vidéo et non seulement audio.

Puis, dans une étape 458, le procédé procède à l'activation du haut-parleur pour permettre à un utilisateur, éventuellement à terre, d'entendre clairement les instructions données par le centre d'appel, et d'échanger avec celui-ci.

Dans une étape 459, le procédé procède à un stockage sécurisé des informations de géolocalisation ainsi que des informations collectées des capteurs du bloc 180 au sein de la mémoire 110. Ces informations sont stockées dans une zone sécurisée qui ne pourra permettre un accès direct, évitant ainsi qu'un individu mal intentionné ne puisse effacer ces données critiques.

Puis dans une étape 460, si la communication avec le centre de téléassistance et le serveur 400 le permet, le procédé procède à l'émission d'un message SMS accompagné par la transmission d'un fichier comportant l'ensemble des données saisies par les capteurs ainsi que le message audio/vidéo. Dans un mode de réalisation particulier, ces données pourront être transmises au sein d'un fichier XML (*eXtended Markup-Language*) comportant les données des capteurs du bloc 180.

Dans un mode de réalisation préféré, le serveur 400 procède ensuite, de manière conventionnelle à la mise en oeuvre d'un service de téléassistance comportant, notamment, une tentative de mise en contact avec l'utilisateur, puis la recherche d'informations relatives à celui-ci pour appeler des contacts proches et, le cas échéant, le recours à l'intervention publique pour apporter assistance à l'utilisateur en détresse.

Lorsque la communication s'achève avec le centre de téléassistance, le procédé poursuit par une étape 490 qui est la fin du processus.

Comme on le voit avec l'exposé qui précède, l'application installée dans le téléphone mobile permet d'accroître significativement les conditions de sécurité de l'utilisateur, au fur et à mesure de ses déplacements dans la ville ou sur un terrain d'activité. Par la coopération des différentes fonctionnalités présentes dans la machine, et des nombreux procédés décrits précédemment, il est apporté à l'utilisateur, non pas un simple « outil » de génération de SMS, mais un véritable environnement matériel/logiciel permettant, à l'instar d'un « garde-corps numérique », une sécurisation significative de l'utilisateur, qu'il s'agisse d'une personne âgée, d'une femme seule, d'une personne victime de discrimination ou d'un enfant.

On décrit à présent, avec la procédure GO SAFE, une mode de réalisation préféré de l'invention permettant une analyse contextuelle particulièrement avantageuse qui tient compte du calcul d'itinéraires pouvant être effectué par le système de traitement de données du téléphone intelligent.

Cette procédure GO SAFE est un mode spécifique d'analyse contextuelle de l'étape 360 de la figure 3, sera décrite ci-après en relation avec la figure 5.

Le procédé débute par une étape 510 qui est le lancement de l'application GoSafe ou, alternativement d'un service GoSafe.

Puis, dans une étape 520, un test est effectué pour solliciter de l'utilisateur qu'il choisisse suivant une des deux modalités, à savoir le *suivi (tracking) intermittent,* ou le *suivi vers destination.*

Selon la sélection opérée par l'utilisateur, le procédé poursuit soit avec une étape 530 *(Suivi intermittent),* soit avec une étape 540 *(suivi vers destination).*

Dans le cas d'un *suivi intermittent,* le procédé poursuit, après l'étape 530, par une *étape 531* au cours de laquelle est saisie et stockée dans le téléphone une valeur T d'une durée de temporisation choisi par l'utilisateur.

Puis le procédé procède, au cours d'une étape 532 , à une première capture des données de géolocalisation du téléphone 100.

Puis dans une étape 533, le procédé procède à une initialisation d'un circuit d'horloge ou de temporisation.

Dans une étape 534, le procédé effectue un test pour déterminer si le circuit d'horloge, qui a commencé à compter à partir de son initialisation, a atteint la valeur T préalablement stockée dans le téléphone.

Si le circuit d'horloge n'a pas atteint la valeur T, alors le procédé reboucle sur l'étape 534 jusqu'à l'expiration du délai correspondant à la valeur T.

A l'expiration de la durée prédéterminée T, le test de l'étape 534 s'avère positif et le procédé poursuit avec une étape 535 qui est un test permettant de déterminer si l'utilisateur confirme l'arrivée à destination de son parcours. Toute confirmation pourra être envisagée comme, par exemple, une validation par pression tactile à l'a suite d'une invitation générée par le système.

Si la réponse au test de l'étape 535 est positive, alors le procédé va à une étape 590 qui est alors la fin de la procédure GoSafe.

Si la réponse au test de l'étape 535 est négative, le procédé poursuit avec une étape 536 au cours de laquelle le téléphone procède à la capture des données de géolocalisation et, dans une étape 537, cette localisation est comparée avec une, voire deux localisations précédemment enregistrées à l'initialisation du circuit d'horloge ou à l'écoulement de ce dernier.

Dans un mode de réalisation préféré, le test de l'étape 537 consiste à comparer la localisation GPS avec les deux localisations précédentes pour déterminer si l'on a une séquence de trois localisations identiques.

Si l'on observe une séquence de localisations identiques, alors le procédé procède vers une étape 539 qui consiste à appeler le procédé de traitement d'alerte tel que décrit dans la figure 4.

Dans le cas contraire, si le test de l'étape 538 est négatif, montrant que la localisation GPS évolue de manière constante, alors le procédé retourne de l'étape 538 à l'étape 534 pour une nouvelle réinitialisation du circuit d'horloge.

Si le test de l'étape 520 a conduit à la sélection d'un suivi vers destination, alors le procédé passe de l'étape 520 à une étape 540.

Puis, dans une étape 541, le procédé poursuit avec une invitation à l'utilisateur de saisir une destination particulière. Dans un mode de réalisation particulier, l'application offrira la possibilité de recourir à une liste de favoris de destinations, dont notamment la destination du domicile (HOME).

Puis, dans une étape 542, le procédé poursuit avec une invitation à l'utilisateur de saisir un retard prédéterminé tolérable (RT), exprimé en minutes, par rapport à une estimation calculée de l'heure d'arrivée (*Estimated Time Arrival*).

Puis dans une étape *543*, le procédé poursuit avec une saisie analogue d'un écart tolérable ET (en mètres) par rapport à un trajet défini calculé par le service « *Map* » du téléphone intelligent.

Il convient de noter que les valeurs de paramétrage RT et ET pourront être saisies soit à chaque itération du procédé de la figure 5 ou, dans un mode de réalisation particulier, pourront être extraits de valeurs de paramétrages stockés dans des profils préalablement enregistrés.

Une fois la configuration achevée, le procédé poursuit ensuite, dans une étape 544, avec un calcul - en temps réel - d'un retard effectif (RE) et d'un écart effectif (EE) calculés par au trajet défini par le service « *map* » du téléphone intelligent, ou par tout logiciel de calcul d'itinéraires et de navigation bien connu d'un homme du métier.

Puis, dans une étape 545, le procédé procède à un test pour déterminer si RE est supérieur à RT, auquel cas, le procédé va à l'étape 590 qui consiste en le déclenchement d'une alerte qui sera traité suivant l'exposé décrit en relation avec la figure 4.

Lorsque le test de l'étape 545 est négatif, le procédé poursuit ensuite avec une étape 546 qui permet de vérifier si ET > EE, auquel cas, comme précédent, le procédé va à l'étape 590.

Dans le cas contraire, si le test de l'étape 546 se révèle négatif, alors le procédé boucle à nouveau vers l'étape 544.

Comme on l'a vu, le procédé de l'invention permet de configurer un téléphone mobile intelligent pour mettre à disposition toutes les informations liées à l'environnement du téléphone et détecter d'une manière centralisée une situation de risque pour l'utilisateur. D'une manière générale, toutes les informations détectées par les capteurs restent dans le téléphone et ne sont nullement transmises à un quelconque serveur, ce qui préserve la confidentialité de ces données personnelles à l'utilisateur. Ces données n'ont vocation à sortir de « l'assistant de sécurité » que concrétise l'application téléchargée, en cas de risque significatif ou signal de détresse de l'utilisateur. Dès la détection d'une situation de risque significatif, le traitement de l'alerte est mis en oeuvre et le téléphone est configuré alors pour un appel à un centre de téléassistance 400 - ainsi qu'à des téléphones de proches - pour tenter de transmettre, d'une part, un message SMS mais également un fichier comportant l'ensemble des informations liées à l'environnement du téléphone et captées par les capteurs.

Ce fichier d'information complète significativement les informations déjà contenues dans le message SMS qui ne comportent que les seules informations de géolocalisation et d'identification du téléphone/utilisateur.

C'est donc un apport considérable de l'invention de permettre de collecter et de transmettre en toute sécurité ces information au centre serveur 400.

On va décrire à présent un cas particulier permettant, dans une situation quelque peu extrême dans laquelle le téléphone mobile n'est couvert par aucun réseau GSM, d'assurer l'envoi d'un SMS, à défaut de permettre l'envoi combiné d'un SMS et du fichier de données des capteurs.

L'invention proposée ici apporte une amélioration significative en ce qu'elle permet de transmettre un message au serveur même dans des situations d'extrême isolement par rapport aux stations de base du système de communication cellulaire.

Dans un mode de réalisation particulier, le procédé consiste à venir adjoindre au téléphone mobile intelligent un accessoire supplémentaire - sous forme d'une coque adaptée pour recevoir le téléphone - et permettant de venir ajouter une antenne et un circuit amplificateur supplémentaire pour permettre une véritable communication voix et données via un satellite.

Une telle solution est connue d'un homme du métier et est commercialisée, par exemple sous l'appellation commerciale *SatSleeve* fabriquée par la société Thuraya, et présentée notamment sur le lien suivant :
https://www.zdnet.com/article/turn-your-android-smartphone-or-iphone-into-a-satellite-phone/

Dans ce mode de réalisation, le téléphone est équipé d'un amplificateur externe et une application qui permet l'assignation d'un numéro satellite autorisant la communication par satellite.

Alternativement, dans un autre mode de réalisation, le téléphone mobile peut être configuré pour fonctionner même sans le dispositif externe comportant l'antenne spécifique et le circuit amplificateur. En effet, il a été découvert qu'une communication par satellite reste possible même avec l'antenne native d'un téléphone. Cependant, compte tenu de la faiblesse de puissance d'une antenne native et sans pour autant, recourir à l'utilisation d'amplificateur externe et d'une application, ne peuvent transiter que des données très légères telles que des SMS.

Par conséquent, dans ce dernier mode de réalisation, l'application téléchargée dans le téléphone mobile permet de configurer celui-ci pour permettre une communication satellitaire basée sur l'antenne native du téléphone qui, bien que dégradée, permet néanmoins l'ouverture d'un canal de communication pour la transmission d'un SMS.

Une fois ce SMS transmis au serveur de téléassistance, comportant les données de géolocalisation de l'utilisateur, le serveur de téléassistance peut alors procéder à une prise en charge de l'alerte critique. On notera que ce SMS peut également être transmis vers un proche préalablement désigné.

L'on rappelle par ailleurs que, s'agissant des numéros de téléphone satellite, ceux-ci sont des identifiants uniques attribués comme numéros de téléphone uniques.

Dans le dernier mode de réalisation qui est considéré, l'application téléchargée dans le téléphone intelligence utilise une identification basée sur le numéro IMEI (*International Mobile Equipment Identity*) du téléphone comme numéro unique, pour établir les communications par satellite entre deux téléphones.

Ainsi, grâce à cette disposition, l'application téléchargée permet l'établissement d'un canal de communication unique entre 2 téléphones intelligents permettant de relier de manière exclusive, une personne en détresse et un contact d'urgence.

### Protocole mis en oeuvre

Le protocole IMMARSAT pour la communication par satellite via leurs API qui permettent de trouver les fréquences utilisables et prédéfinies, a été utilisé pour calibrer l'antenne native du téléphone et établir la communication avec le satellite. Ce processus est généralisable sur tout autre réseau satellitaire.

Comme cela est décrit précédemment, le numéro IMEI du téléphone est utilisé pour l'identification du destinataire - en général le centre d'appel - mais aussi de l'expéditeur.

Ainsi, le procédé décrit permet d'établir, de manière très avantageuse, une possibilité de communication entre deux téléphones mobiles comportant l'application décrite précédemment.

Plus spécifiquement, le fonctionnement de l'application est le suivant :
Après un test de réseau dans l'application téléchargée dans le téléphone - désignée ci-après BIPSOS pour plus de commodité, une classe est appelée pour traiter l'envoi des données par satellite.

Au déclenchement d'une alarme, un test de réseau est lancé dans l'application - ci-après désignée - BipSOS.

En l'absence de réseau, une classe est appelée pour traiter l'envoi des données par satellite.

Le processus de déroule comme suit :
1. Prise de contrôle de l'antenne physique par l'application :
   - La classe prend le contrôle de l'antenne physique de l'application afin de mettre en oeuvre un procédé consistant à :
      ∘ changer de fréquence pour l'adapter à fréquence requise par le satellite
      ∘ se synchroniser par la fréquence utilisée par Immarsat pour envoyer un sms vers le téléphone distant

En pratique, dans un mode de réalisation particulier, cette prise de contrôle s'effectue par l'exécution d'un code assembleur. En effet, cela permet alors de faire descendre le niveau du langage vers un langage système, afin de mieux gérer et alléger le paquet d'informations traitées et de bien s'assurer du changement de fréquence.

Une classe récupère ensuite les données de géolocalisation de la puce GPS via une fonction de récupération fournie (destinée aux développeurs) par tous les fabricants de smartphones.

Ensuite la classe fait appel au code assembleur ; un programme dit "de *calibration",* écrit en assembleur, « évalue et formate" l'antenne native du smartphone pour l'orienter sur la fréquence fournie par Immarsat

La calibration s'exprime par un changement de fréquence, via le programme dit de calibration. Les informations sont traitées en assembleur via des codes similaires à ceci : 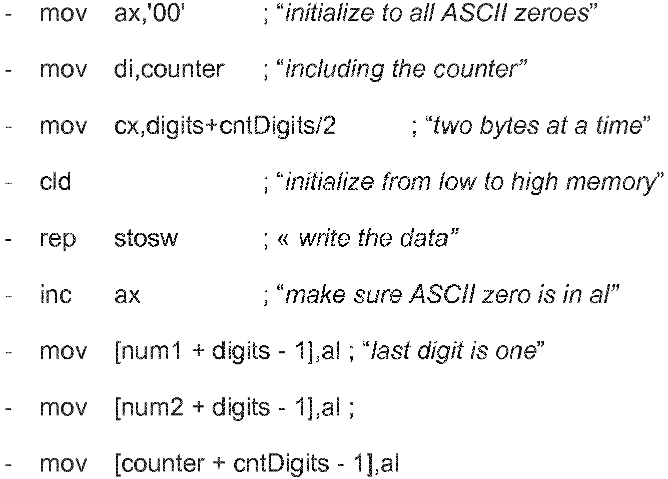 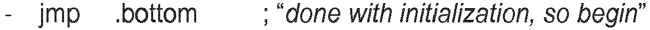
- Après cette opération de calibration, le "paquet" de data pèse dorénavant de 140 à 1000 octets en fonction de l'architecture du processeur du smartphone car le code assembleur diffère en fonction de l'architecture du processeur :
   x86 (32 bits) ou x64 (64 bits). Il est donc formaté pour pouvoir être traité en niveau de signal accepté par l'antenne native du smartphone
- Le "paquet de data est alors envoyé sur la fréquence : 1525-1559 MHz and 1626.5-1660.5 MHz du satellite Immarsat en utilisant le niveau maximum fourni par l'antenne native du téléphone intelligent (entre 700 MHz à 2700 MHz)
- Le "paquet de data est envoyé vers un destinataire identifié par son IMEI (au contraire des téléphones satellites qui utilisent leur propre système de numérotation).

L'identification par IMEI est la première étape d'une orientation stratégique pour l'identification non contestable de la personne émettrice d'une alarme. En effet, ce processus permet également de recueillir des informations supplémentaires telles que les empreintes digitales, vocales et faciales.

Ce processus est implanté dans le téléphone de l'utilisateur au moyen de l'application spécifique BipSos. Il est également implanté dans le téléphone du contact d'urgence ("contact par satellite")... ce qui permet à chaque téléphone de pouvoir envoyer et recevoir des SMS, via la liaison satellite Immarsat.

Il est rappelé que cette opération d'envoi d'un SMS à partir d'un smartphone est également valable à la réception. Ce processus d'émission/réception est rendu possible par :
- d'une part par l'exécution du programme de calibration sur chaque appareil
- d'autre part, par l'identification réciproque et obligatoire de l'émetteur et du récepteur.

Il convient de noter que l'opération d'envoi/réception d'un SMS entre deux smartphones ne requiert l'intervention d'aucun serveur externe. Le processus garantit donc la totale confidentialité des informations échangées. Bien évidemment, il pourra être avantageux de mettre en place un échange de SOS entre le téléphone et un serveur externe, telle serveur 400.

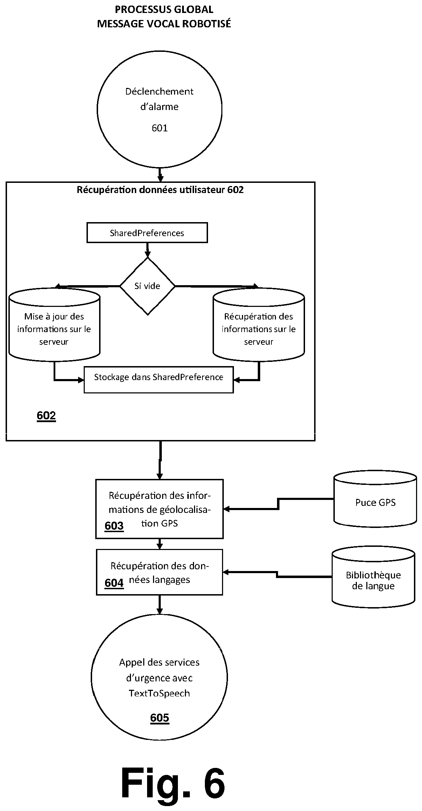

On décrit à présent un mode de réalisation particulier visant à la mise en place d'un message robotisé, tel qu'illustré avec les étapes 601-608 de la figure 6.

Le processus démarre avec une étape 601 qui est le déclenchement d'une alarme. Puis, dans une étape 602 , le procédé effectue une récupération des informations utilisateurs stockées dans l'application Bip SOS via la classe native d'Android ou d'iOS qui est nommé SharedPreferences.

Ensuite, dans une étape 603 , le procédé effectue une récupération des informations de géolocalisation GPS. La localisation GPS de l'utilisateur est fournie nativement par la puce GPS intégré dans le smartphone. Cela permet donc aussi de situer l'utilisateur par rapport au pays de résidence d'où il a enregistré le Bip SOS et ainsi savoir s'il est en déplacement hors pays.

Le positionnement de l'utilisateur aussi peut être connu, en cas échéant, via le système de roaming fourni par son fournisseur téléphonique en se basant sur le code pays changeant.

Dans une étape 604 , le procédé effectue une récupération des données de langage. A cet effet, le Bip SOS contient une bibliothèque de langue native de base qui a été spécialement conçue pour lui, et mise à jour via de l'apprentissage machine. Donc, à chaque changement de pays de l'utilisateur, cette bibliothèque se met à jour automatiquement dès que l'utilisateur se connecte au réseau internet.

Dans une étape 605, le procédé effectue une opération d'appel des services d'urgence au moyen d'une fonction de synthèse vocale, En effet, avec tous ses éléments fournis, le Bip SOS peut construire un message robotisé lors de l'appel téléphonique vers les urgences (pompiers, police ou autre) selon la situation et selon la langue du pays d'appel grâce à la classe native d'Android ou de iOS qui s'appelle TextToSpeech. D'une manière générale, la mise en oeuvre d'une synthèse vocale à partir d'un message textuel est bien connue d'un homme du métier et, dans un souci de concision, ne sera donc pas décrite plus avant. Il suffit de souligner que, dans l'application spécifique qui est envisagée ici, on effectue une synthèse vocale multilingue en tenant compte du contexte linguistique fourni par la donnée GPS. Grâce à cette disposition particulièrement avantageuse une touriste étrangère visitant Paris pourra voir son téléphone mobile appeler les services d'urgences de la capitale et ce directement en français.

### a- Zone avec réseau :

Le message vocal robotisé est exprimé selon les informations utilisateurs dont voici les détails :
- Informations utilisateurs : étape 602

Les informations utilisateurs sont déjà stockées dans l'application via la classe native d'Android ou d'iOS qui est nommé *SharedPreferences.*
- Localisation GPS : étape 603

La localisation GPS de l'utilisateur est fournie nativement par la puce GPS intégrée dans le smartphone. Cela permet de situer l'utilisateur par rapport au pays de résidence d'où il a enregistré l'application et ainsi, de savoir s'il est en déplacement hors de son pays 'enregistrement initial donc de résidence.

Le positionnement de l'utilisateur aussi peut être connu, en cas échéant, via le système de roaming fourni par son fournisseur téléphonique en se basant sur le code pays changeant.
- Bibliothèque de langue : étape 604

L'application contient une bibliothèque de langues natives de base qui a été spécialement conçue pour elle ; cette bibliothèque est mise à jour via le procédé de "machine learning". EN conséquence, à chaque changement de pays de l'utilisateur, cette bibliothèque se met à jour automatiquement dès que l'utilisateur est connecté à internet.

Ainsi donc avec tous ses éléments fournis et recueillis, l'application peut construire un message robotisé lors de l'appel téléphonique vers les urgences (pompiers, police ou autre) selon la situation et selon la langue du pays d'appel grâce à la classe native d'Android ou de iOS appelée *TextToSpeech.* Etape 605

### b- Zone hors réseau :

La méthode de récupération des informations est la même que dans un environnement avec réseau, sauf que pour l'envoi de l'alarme, les données sont empaquetées et envoyées vers le satellite, après la communication satellite établie selon le processus démontré supra, les données sont transmises dans le serveur Active Assistance et c'est le serveur qui traduit le message en système équivalent au TextToSpeech.

Le système d'envoi d'alerte hors réseau étant déjà expliqué dans la revendication précédente.

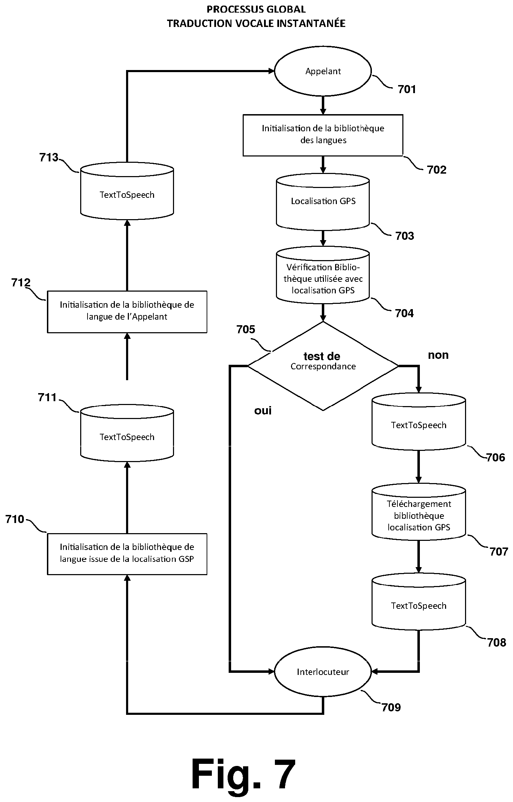

On décrit ensuite un autre mode de réalisation particulier visant à la mise en place d'une traduction vocale simultanée, telle qu'illustrée dans les étapes 701-713 de la figure 7.

Le système de traduction vocale simultanée, à la différence de google traduction par exemple, se joue toujours par le système désigné précédemment *TextToSpeech,* couplé avec un temps optimal de traduction c'est-à-dire sans temps de latence.

Le processus commence dans une étape 701 quand la communication téléphonique est établie entre l'utilisateur (Appelant) et le service d'urgence appelé (Correspondant) :
Dans une étape 702 : le procédé procède à une initialisation de la bibliothèque des langues préinstallée dans l'application.

Ensuite, dans une étape 703 : le procédé effectue une localisation GPS. A cet effet, l'application fait appel au capteur GPS pour enregistrer la localisation GPS de l'utilisateur par rapport au pays de résidence d'où il a enregistré le Bip SOS et ainsi savoir s'il est en déplacement hors de son pays de résidence ou non.

Dans une étape 704, le procédé effectue la vérification de la correspondance entre la bibliothèque utilisée et la localisation GPS.

Dans une étape 705, le procédé effectue un test de correspondance.: Si cette correspondance confirme la correspondance exacte entre la bibliothèque utilisée et la localisation GPS, confirmant que l'utilisateur et son interlocuteur correspondront dans la même langue, alors le procédé poursuit avec une étape 709 qui permet l'établissement de la communication téléphonique.

Si le test de l' étape 705 montre que la correspondance entre la bibliothèque utilisée et la localisation GPS n'est pas établie, alors le procédé poursuit avec une étape 706 dans le but de réalisation une première opération de synthèse vocale. A cet effet, l'application fait appel à la classe TextToSpeech qui traduit les paroles de l'appelant et fabrique un texte dans la langue de l'appelant.

Dans une étape 707 , le procédé effectue un téléchargement de la bibliothèque de localisation GPS. Si la langue de l'interlocuteur n'existe pas dans la bibliothèque des langues, alors l'application télécharge et initialise la bibliothèque de langage correspondant à la localisation GPS relevée,

Puis dans une étape 708 : le procédé met en oeuvre une seconde opération de synthèse vocale. A cet effet l'application fait appel à la classe TextToSpeech pour traduire le texte créé ci-dessus et générer un message vocal robotisé dans la langue de l'interlocuteur.

Puis le procédé poursuit avec l'étape 709, permettant à l'interlocuteur d'écouter le message vocal robotisé et de répondre dans sa langue.

Dans une étape 710, le procédé poursuit par une initialisation, au moyen de l'application, de la bibliothèque de la langue issue de la localisation GPS, i.e. la langue de l'interlocuteur

Dans une étape 711, le procédé met en oeuvre une troisième opération de synthèse vocale au moyen de l'application qui appelle la classe TextToSpeech pour fabriquer un message texte dans la langue de l'interlocuteur.

Le procédé poursuit ensuite avec une étape 712 au cours de laquelle l'application initialise la bibliothèque de la langue de l'appelant.

Enfin, une étape 713, le procédé met en oeuvre une quatrième opération de synthèse vocale au moyen de la classe TextToSpeech pour traduire et générer un message vocal robotisé dans la langue de l'appelant.

Puis le procédé revient dans l'étape 701 au cours de laquelle l'appelant écoute le message vocal robotisé.

Comme on le voit dans la figure 7, le dialogue peut ainsi continuer en reprenant la routine décrite ci-dessus (701 à 713) pour le temps nécessaire à la bonne transmission des informations jusqu'à la fin de la communication.

On décrit à présent quelques détails relatifs à la bibliothèque de langues :
Le module de bibliothèque de langues, qui a été conçu spécialement pour l'application se présente comme suit :
- C'est une base de données de langues.
- Nativement, elle enregistre automatiquement toutes les langues disponibles dans le smartphone de l'utilisateur lors de l'installation l'application,
- C'est donc la bibliothèque de base.
- Mais lors de déplacement vers un lieu ou un pays dont la langue n'a pas encore été traduite, si le smartphone à accès à internet, la bibliothèque s'enrichira grâce au système d'apprentissage par machine (machine learning dans la littérature anglo-saxonne), en navigant virtuellement dans les sites internet enregistrés dans le domaine du pays, mais aussi en téléchargeant la langue du pays où se trouve le smartphone grâce à un module adapté, par exemple google langages.

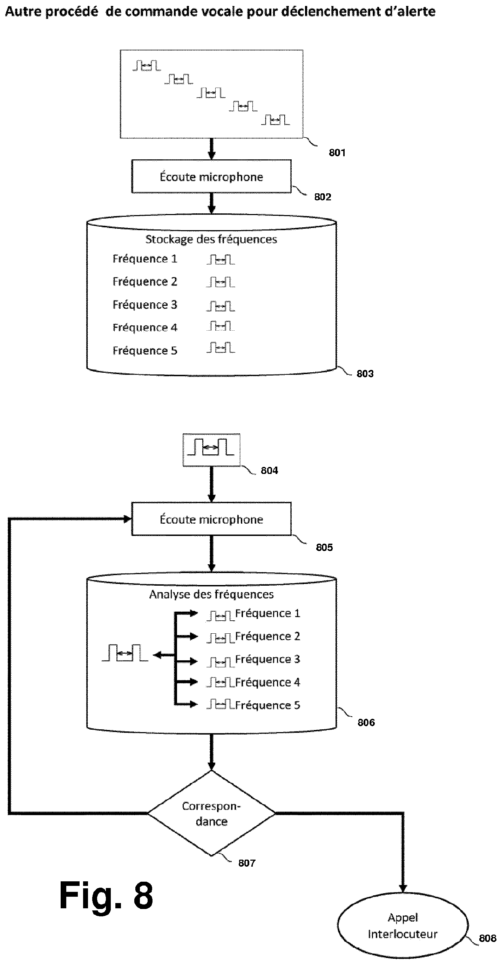

On décrit à présent, en relation avec la figure 8, un autre mode de réalisation particulier de commande vocale pour le déclenchement d'une alarme.

Le procédé démarre avec une étape 801 d'initialisation, au cours de laquelle l'utilisateur est invité à enregistrer un nombre déterminé de phrases, au minimum 3, contenant obligatoirement le mot clé défini "Au secours" tel que, par exemple "Au secours, j'ai de fortes douleurs dans la poitrine", "Au secours, on m'attaque", "Au secours, je suis tombé" etc. afin d'identifier les fréquences sonores caractérisant ces expressions prononcées dans différentes tonalités et circonstances : chuchotement, voix normale, voix criante, voix apeurée, etc. et conduisant à l'identification vocale de l'utilisateur, voire à la définition de son empreinte vocale par la fréquence relevée.

Dans une étape 802, le procédé active le microphone qui peut ainsi écouter et capter les messages vocaux enregistrés par l'utilisateur.

Puis, dans une étape 803, la classe native d'enregistrement stocke ces sons dans l'application sous forme de fréquences : fréquence 1, fréquence 2, fréquence 3, etc. Ainsi s'achève la procédure d'initialisation préalable basée sur les étapes 801-803.

Puis le procédé poursuit avec une étape 803 au cours de laquelle le procédé de commande vocal devient proprement opérationnel et le microphone est alors activé, dans une étape 805, dans le but de permettre une écoute contextuel du milieu ambiant. Dans une utilisation d'urgence, selon le concept de l'application qui est de détecter dans des modes variés et différenciés et dans les conditions d'environnement recueillies par le téléphone intelligent, l'utilisateur prononce le mot défini comme commande vocale pour déclencher une alarme, par exemple "Au secours" dont les fréquences sont enregistrées par le microphone activé ou réactivé et stocké dans l'application.

Dans une étape 806, le procédé effectue une corrélation du signal sonore capté par le microphone pour tenter d'obtenir une corrélation entre ce signal sonore et l'une des expressions vocales de secours préalablement enregistrées dans les étapes 801-803. A cet effet, l'application compare la fréquence du mot enregistré pour déclencher une alarme aux trois à cinq expressions préenregistrées.

**NOTA :** les fréquences sont définies comme suit : sous la forme f=1/T ou f est la fréquence en Hertz (Hz ou s-1) et T la période en seconde (s).

Dans l'application, les fréquences préenregistrées sont assorties d'une variabilité tolérée de (+) ou (-) 10%. La fourchette ainsi obtenue pour chaque fréquence préenregistrée, a pour but, par comparaison avec le mot enregistré, d'établir la correspondance avec le mot enregistré tout en tenant compte de l'influence de conditions extérieures sur la voix de l'utilisateur comme la fatigue, la maladie, la rapidité ou la force de l'expression.

Dans une étape 807, le procédé effectue un test de correspondance. Si l'analyse n'établit pas la correspondance, le procédé retourne à l'étape 805 et l'application reprend l'analyse de la commande vocale prononcée ou, alternativement, reprend le processus complet à l'étape 803 si l'utilisateur répète de nouveau la commande vocale.

Si le test de l'étape 807 aboutit à établir une correspondance, alors le procédé poursuit avec une étape 808 au cours de laquelle l'application lance l'alarme, c'est-à-dire l'appel téléphonique et un SMS vers l'interlocuteur.

**NOTA :** le processus défini ci-dessus présente les grands avantages suivants :
- Identification de l'utilisateur par sa voix et, par conséquence, certification de l'alarme
- Processus léger et rapide par recueil et traduction des commandes vocales par la capture et l'analyse des fréquences sonores et non pas par le traitement des bibliothèques de langages
- Besoin très faible de ressources permettant ainsi une très basse consommation de la batterie

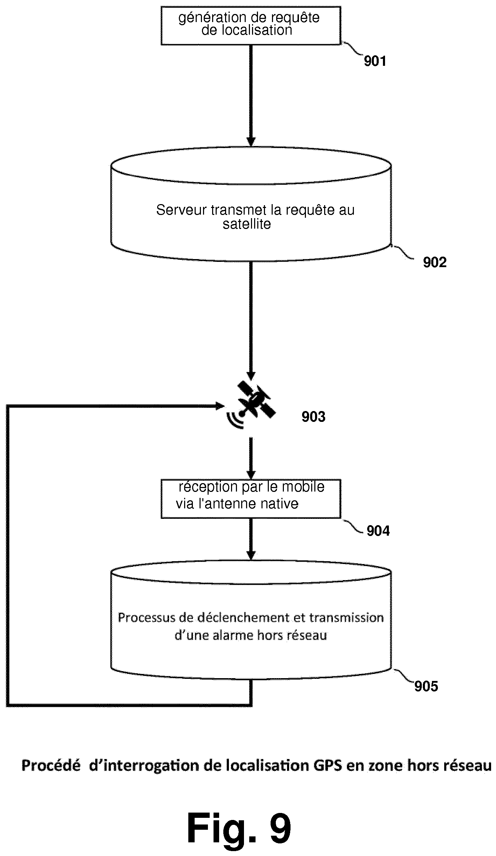

On décrit à présent, en relation avec la figure 9, un mode de réalisation particulier visant à la mise en place d'une communication entre un serveur chargé de la gestion de la sécurité physique et individuelle d'un utilisateur vers un téléphone mobile de ce même utilisateur, et ce dans une situation quelque peu extrême qui est celle dans laquelle ledit téléphone mobile n'est couvert par aucun réseau GSM. Dans une telle situation particulièrement critique, le procédé de l'invention vise à à interroger la géolocalisation GPS dudit téléphone mobile et donc de son utilisateur, comme on va le voir plus particulièrement avec les étapes 901-905 illustré dans la figure 9.

Le procédé démarre avec une étape 901 au cours de laquelle le serveur génère une requête visant à solliciter la localisation GPS du téléphone mobile de l'utilisateur pris en charge par le service de sécurité physique individuelle. A cet effet, le serveur élabore une instruction, basée généralement sur un paquet d'informations, de préférence codée en code assembleur visant à extraire la géolocalisation GPS du téléphone intelligent situé en zone hors réseau et identifié par son IMEI

Le procédé poursuit ensuite avec une étape 902 au cours de laquelle le serveur transmet la requête générée vers le satellite et ce en utilisant une fréquence adaptée pour se synchroniser à la fréquence utilisée par ledit satellite.

Dans une étape 903 : le procédé procède avec la réception, par ledit satellite de la requête générée par le serveur, et comportant le paquet d'informations incluant le numéro IMEI du téléphone mobile. Le satellite procède alors à la transmission d'une requête vers le téléphone mobile.

Dans une étape 904 : le paquet d'informations est reçu par l'antenne native du téléphone intelligent

Dans une étape 905 : est repris le processus défini supra concernant l'envoi d'une alarme hors réseau.
- La classe prend le contrôle de l'antenne physique de l'application afin de mettre en oeuvre un procédé consistant à :
   o changer de fréquence pour l'adapter à fréquence requise par le satellite
   o se synchroniser par la fréquence utilisée par Immarsat pour envoyer un sms vers le téléphone distant

En pratique, dans un mode de réalisation particulier, cette prise de contrôle s'effectue par l'exécution d'un code assembleur. En effet, cela permet alors de faire descendre le niveau du langage vers un langage machine, afin de mieux gérer et alléger le paquet d'informations traitées et de bien s'assurer du changement de fréquence.

## Revendications

1. Un procédé de génération d'une alerte vocale ou par clic et d'un message électronique à partir d'un téléphone mobile intelligent comportant un affichage et divers capteurs dont un capteur GPS, le procédé comportant les étapes consistant à :
- télécharger dans un téléphone intelligent une application de téléassistance comportant la mise en place d'un service de contrôle du microphone même en cas de verrouillage du téléphone ;
- activer les capteurs présents dans le téléphone mobile pour collecter des informations liées à l'environnement du téléphone mobile ;
- procéder à une analyse contextuelle des informations collectées par les capteurs pour déterminer une situation d'urgence requérant le déclenchement d'une alerte ; dans lequel ledit service de contrôle du microphone procède, de manière périodique, à l'initialisation du microphone de manière à assurer, en toutes circonstances, le contrôle du canal audio ; et dans lequel l'application est configurée pour capter des messages audio d'une durée ou longueur maximale prédéfinies, et à comparer ces messages avec une bibliothèque de messages audio prédéfinies.

2. Le procédé selon la revendication 1, **caractérisé en ce que** l'analyse contextuelle comporte au moins une des étapes suivantes :
- la détection d'un « double clic » sur un bouton de l'affichage et/ou une zone spécifique dudit affichage ;
- la détection d'un « appui long » sur une zone spécifique dudit affichage ;
- la détection d'un « appui long » sur la touche Volume d'un téléphone intelligent
- une combinaison prédéfinie d'appui longs et d'appuis courts,
- une détection d'alerte vocale capturée par le microphone ;
- une analyse contextuelle des informations générées par les capteurs présents dans ledit téléphone mobile.

3. Le procédé selon la revendication 1 **caractérisé en ce que** ledit service de contrôle du microphone effectue un contrôle permanent du microphone et du canal audio en langage machine de bas niveau, assembleur par exemple, notamment par sa mise en veille et sa réactivation ; et **en ce que** l'application est configurée pour capter des fréquences préenregistrées par l'utilisateur garantissant ainsi son identification vocale.

4. Le procédé selon la revendication 1 **caractérisé en ce que** le traitement de l'alerte comporte les étapes consistant à :
- optionnellement inviter l'utilisateur à confirmer l'alerte déclenchée (420) ;
- tenter (451, 452) un appel d'un contact défini dans une liste de N contacts ;
- en cas de succès d'appel dudit contact , lancement d'une session de communication et transmission d'un SMS (440) comportant les données de géolocalisation du téléphone mobile ;
- en cas d'insuccès de la tentative d'appel desdits contacts, lancement d'une procédure appel à un centre de téléassistance, ladite procédure d'appel de téléassistance comportant les étapes consistant à :
- activer le microphone audio (457) ;
- activer le haut-parleur (458) ;
- stockage sécurisé des données des capteurs (459) ;
- transmission SMS & des données des capteurs (460).

5. Le procédé de la revendication 1 **caractérisé en ce que** l'étape d'analyse contextuelle comporte les étapes consistant à :
- sélectionner un mode de suivi intermittent ou de suivi vers destination ;
Dans lequel ledit mode de suivi intermittent consister à procéder, à intervalle régulier, à des comparaisons des données de géolocalisation successives pour déterminer une ou plusieurs géolocalisations identiques et, suite à la détermination de plusieurs géolocalisations identiques, pour lancer une détection d'alerte ;
Dans lequel ledit mode de suivi vers destination comporte la définition, par un utilisateur, d'une destination, d'un retard tolérable, RT, et d'un écart tolérable, ET, vers la destination, et le calcul en temps réel du retard effectif, RE, et de l'écart effectif, EE, et de leur comparaison respective avec RT et ET pour déclencher une procédure de traitement d'alerte.

6. Le procédé de la revendication 5 dans lequel les valeurs de RT et ET sont déterminés dans des profils préalablement enregistrés dans le téléphone mobile.

7. Le procédé selon la revendication 1 dans lequel le téléphone intelligent est combiné à un amplificateur et à une antenne satellite, permettant une communication satellitaire voix et données pour le traitement de l'alerte.

8. Le procédé selon la revendication 1 dans lequel le téléphone intelligent est configuré de manière à permettre une communication via un protocole Satellitaire en utilisant l'antenne native du téléphone, pour établir une communication satellitaire entre deux téléphones dans lequel le numéro IMEI du téléphone est utilisé pour l'identification du destinataire - en général le centre d'appel - mais aussi de l'expéditeur.

9. Le procédé selon la revendication 7 dans lequel l'application téléchargée dans le téléphone mobile réalise une communication satellitaire au moyen des étapes suivantes :
- après un test de réseau, une classe est appelée pour traiter l'envoi des données par satellite, dans le but d'une prise de contrôle de l'antenne native du téléphone, afin de
- changer de fréquence
- de synchroniser par la fréquence utilisée par le satellite en vue de l'envoi d'un SMS vers un second téléphone ;
dans lequel, à la suite changement de fréquence, le procédé fait appel à une seconde classe pour envoyer directement le SMS vers le téléphone distant

10. Le procédé selon la revendication 7 dans lequel le téléphone intelligent est configuré pour envoyer et recevoir - via une communication satellite - un SMS avec un autre téléphone intelligent identifié, et pour saisir une empreinte digitale, vocale ou faciale préalablement à la communication.

11. Un dispositif mobile de traitement de données, tel qu'un téléphone intelligent, permettant une communication sans fil au sein d'un réseau cellulaire de type GSM, ledit dispositif comportant :
- une mémoire (110) de stockage de données et de programme
- un processeur (120) permettant l'exécution des applications et le traitement de données,
- un affichage (130);
- un appareil photo (140)
- un haut-parleur (150) associé à son circuit amplificateur,
- une alimentation électrique (160)
- un bloc (170) comprenant diverses interfaces, en particulier une interface réseaux (171) permettant une communication sans fil avec divers réseaux ;
- un bloc (180) comportant de multiples capteurs permettant de générer de multiples informations et signaux représentatifs de l'environnement d'un utilisateur dans lequel le téléphone est configuré au moyen d'une application téléchargée pour la mise en oeuvre du procédé décrit dans l'une quelconque des revendications 1 à 10.

12. Procédé selon la revendication 1 dans lequel la détection d'un "appui long" est effectuée directement sur la touche Volume d'un téléphone indépendant".

13. Procédé selon la revendication 1 dans lequel l'application est configurée pour générer un message vocal robotisé.

14. Procédé selon la revendication 1 dans lequel l'application permet à un utilisateur de pouvoir parler et être compris d'un interlocuteur quelle que soit sa langue, par un processus de traduction vocale instantanée.

15. Procédé selon la revendication 1 dans lequel l'application reconnait la voix de l'utilisateur et permet ainsi l'identification certaine de l'utilisateur.

## Patentansprüche

1. Verfahren zum Erzeugen eines Sprach- oder Klickalarms und einer elektronischen Nachricht von einem mobilen Smartphone, das ein Display und verschiedene Sensoren, einschließlich eines GPS-Sensors, umfasst, wobei das Verfahren die folgenden Schritte umfasst:
- Herunterladen einer Fernunterstützungsanwendung in ein Smartphone, die die Implementierung eines Mikrofonsteuerungsdienstes beinhaltet, auch wenn das Telefon gesperrt ist;
- Aktivieren der im Mobiltelefon vorhandenen Sensoren, um Informationen über die Umgebung des Mobiltelefons zu sammeln;
- Durchführen einer kontextuellen Analyse der von den Sensoren gesammelten Informationen, um eine Notfallsituation zu bestimmen, die das Auslösen eines Alarms erfordert;
wobei der Mikrofonsteuerungsdienst das Mikrofon periodisch initialisiert, um unter allen Umständen die Steuerung des Audiokanals sicherzustellen; und wobei die Anwendung konfiguriert zum Erfassen von Audio-Nachrichten mit einer vordefinierten maximalen Dauer oder Länge und zum Vergleichen dieser Nachrichten mit einer Bibliothek vordefinierter Audio-Nachrichten.

2. Verfahren nach Anspruch 1, **dadurch gekennzeichnet, dass** die kontextuelle Analyse die folgenden Schritte umfasst:
- Erkennen eines "Doppelklicks" auf eine Schaltfläche auf dem Display und/oder einen bestimmten Bereich des Displays;
- Erkennen eines "langen Drucks" auf einen bestimmten Bereich der Anzeige;
- Erkennen eines "langen Drucks" auf die Lautstärketaste des Smartphones;
- eine vordefinierte Kombination aus langem Drücken und kurzem Drücken,
- Erkennen von Sprachalarmen, die durch das Mikrofon erfasst werden;
- eine kontextbezogene Analyse der Informationen, die von den im Mobiltelefon vorhandenen Sensoren erzeugt werden.

3. Verfahren nach Anspruch 1, **dadurch gekennzeichnet, dass** der Mikrofonsteuerungsdienst eine permanente Steuerung des Mikrofons und des Audiokanals in Low-Level-Maschinensprache, z. B. Assembler, durchführt, insbesondere durch den Standby-Modus und Reaktivierung, und wobei die Anwendung konfiguriert, um vom Benutzer vorab aufgezeichnete Frequenzen zu erfassen und so seine stimmliche Identifizierung zu gewährleistet.

4. Verfahren nach Anspruch 1, **dadurch gekennzeichnet, dass** die Verarbeitung des Alarms die Schritte umfasst, bestehend aus:
- optional die Aufforderung an den Benutzer, den ausgelösten Alarm zu bestätigen (420);
- Versuch (451, 452), einen engen Kontakt anzurufen, der in einer Liste von N engen Kontakten definiert ist;
- im Falle eines erfolgreichen Anrufs des engen Kontakts, Initiierung einer Kommunikationssitzung und Übertragung einer SMS (440), die Geolokalisierungsdaten des Mobiltelefons enthält;
- im Falle eines erfolglosen Anrufs des engen Kontakts, Einleiten einer Anrufprozedur zu einem Fernunterstützungszentrum, wobei die Fernunterstützungsanrufprozedur die Schritte umfasst, die bestehen aus:
- Aktivieren des Audiomikrofons (457);
- Aktivieren des Lautsprechers (458);
- Durchführung einer sicheren Speicherung der von den Sensoren erfassten Daten (459);
- Übermittlung einer SMS mit Sensordaten (460).

5. Verfahren nach Anspruch 1, **dadurch gekennzeichnet, dass** der Schritt der kontextuellen Analyse die Schritte umfasst, bestehend aus:
- Auswählen eines intermittierenden Verfolgungsmodus oder eines Zielverfolgungsmodus;
wobei der intermittierende Verfolgungsmodus darin besteht, in regelmäßigen Abständen Vergleiche von aufeinanderfolgenden Geolokalisierungsdaten durchzuführen, um eine oder mehrere identische Geolokalisierungen zu bestimmen und, nach der Bestimmung mehrerer aufeinanderfolgender identischer Geolokalisierungen, eine Alarmdetektion zu starten;
wobei der Zielverfolgungsmodus die Definition eines Ziels, einer tolerierbaren Verspätung RT und einer tolerierbaren Abweichung, ET, in Richtung des Ziels durch einen Benutzer und die Berechnung der effektiven Verspätung, RE, und der effektiven Abweichung, EE, in Echtzeit und deren jeweiliger Vergleich mit RT und ET umfasst, um einen Alarmverarbeitungsvorgang auszulösen.

6. Verfahren nach Anspruch 5, wobei die Werte von RT und ET in zuvor im Mobiltelefon aufgezeichneten Profilen bestimmt werden.

7. Verfahren nach Anspruch 1, wobei das Smartphone mit einem Verstärker und einer Satellitenantenne kombiniert ist, die eine Sprach- und Daten-Satellitenkommunikation zur Verarbeitung des Alarms ermöglichen.

8. Verfahren nach Anspruch 1, bei dem das Smartphone so konfiguriert ist, dass es um eine Kommunikation über ein Satellitenprotokoll unter Verwendung der eigenen Antenne des Telefons ermöglicht, um eine Satellitenkommunikation zwischen zwei Telefonen herzustellen, bei der die IMEI-Nummer des Telefons zur Identifizierung des Empfängers - im Allgemeinen das Callcenter - aber auch des Absenders verwendet wird.

9. Verfahren nach Anspruch 7, bei dem die in das Mobiltelefon heruntergeladene Anwendung die Satellitenkommunikation mit Hilfe der folgenden Schritte durchführt
- nach einem Netzwerktest wird eine Klasse aufgerufen, die das Senden von Daten über Satellit verarbeitet, mit dem Ziel, die Kontrolle über die eigene Antenne des Telefons zu übernehmen, um
- die Frequenz zu ändern
- Synchronisierung mit der Frequenz, die der Satellit für den Versand einer SMS an ein zweites Telefon verwendet;
bei dem das Verfahren nach einer Frequenzänderung eine zweite Klasse verwendet, um die SMS direkt an das entfernte Telefon zu senden.

10. Verfahren nach Anspruch 7, wobei das Smartphone konfiguriert ist, um - über Satellitenkommunikation - eine SMS an ein anderes identifiziertes Smartphone zu senden und zu empfangen und um vor der Kommunikation einen Fingerabdruck, eine Stimme oder einen Gesichtsabdruck zu erfassen.

11. Mobile Datenverarbeitungsvorrichtung, wie z.B. ein Smartphone, die eine drahtlose Kommunikation innerhalb eines zellularen Netzwerks vom GSM-Typ ermöglicht, wobei die Vorrichtung Folgendes umfasst:
- einen Speicher (110) zum Speichern von Daten und Programmen,
- einen Prozessor (120), der die Ausführung von Anwendungen und Datenverarbeitung ermöglicht,
- eine Anzeige (130);
- eine Kamera (140)
- einen Lautsprecher (150), der mit seiner Verstärkerschaltung verbunden ist,
- eine Stromversorgung (160)
- einen Block (170) mit verschiedenen Schnittstellen, insbesondere einer Netzschnittstelle (171), die eine drahtlose Kommunikation mit verschiedenen Netzen ermöglicht;
- einen Block (180), der mehrere Sensoren umfasst, die es ermöglichen, mehrere Informationen und Signale zu erzeugen, die für die Umgebung eines Benutzers repräsentativ sind, **dadurch gekennzeichnet, dass** das Telefon mit Hilfe einer heruntergeladenen Anwendung für die Durchführung des in einem der Ansprüche 1 bis 10 beschriebenen Verfahrens konfiguriert ist.

12. Verfahren nach Anspruch 1, bei dem die Erkennen eines "langen Drucks" direkt auf die Lautstärketaste eines unabhängigen Smartphones erfolgt.

13. Verfahren nach Anspruch 1, wobei die Anwendung so konfiguriert ist, dass sie eine automatische Sprachnachricht erzeugt.

14. Verfahren nach Anspruch 1, wobei die Anwendung es einem Benutzer ermöglicht, mit einem Gesprächspartner unabhängig von dessen Sprache oder durch einen sofortigen Sprachübersetzungsprozess zu sprechen und von diesem verstanden zu werden.

15. Verfahren nach Anspruch 1, bei dem die Anwendung die Stimme des Benutzers erkennt und somit eine sichere Identifizierung des Benutzers ermöglicht.

## Claims

1. A method of generating a voice or click alert and an electronic message from a mobile smartphone comprising a display and various sensors including a GPS sensor, the method comprising the steps consisting of:
- downloading a remote assistance application into a smartphone including the implementation of a microphone control service even if the phone is locked;
- activating the sensors present in the mobile phone to collect information related to the environment of the mobile phone;
- performing a contextual analysis of the information collected by the sensors to determine an emergency situation requiring the triggering of an alert;
wherein said microphone control service periodically initializes the microphone so as to ensure, in all circumstances, the control of the audio channel; and in that the application is configured to capture audio messages of a predefined maximum duration or length, and to compare these messages with a library of predefined audio messages.

2. The method according to claim 1, **characterized in that** the contextual analysis comprises the following steps:
- detection of a "double click" on a button on the display and/or a specific area of said display;
- detection of a "long press" on a specific area of said display;
- detection of a "long press" on the Volume key of the smartphone;
- a predefined combination of long presses and short presses,
- voice alert detection captured by the microphone;
- a contextual analysis of the information generated by the sensors present in said mobile phone.

3. The method according to claim 1 **characterized in that** said microphone control service performs a permanent control of the microphone and the audio channel in low level machine language, assembler for instance, in particular by the standby mode and reactivation, and wherein the application is configured for capturing frequencies pre-recorded by the user thus ensuring his/her vocal identification.

4. The method according to claim 1 **characterized in that** the processing of the alert comprises the steps consisting of:
- optionally inviting the user to confirm the alert triggered (420);
- attempting (451, 452) to call a close contact defined in a list of N close contacts;
- in the event of a successful call of said close contact, initiating a communication session and transmission of a SMS (440) comprising geolocation data of the mobile phone;
- in the event of an unsuccessful call of said close contact, initiating a call procedure to a remote assistance center, said remote assistance call procedure comprising the steps consisting of:
- activating the audio microphone (457);
- activating the loudspeaker (458);
- performing a secure storage of the data captured by the sensors (459);
- transmitting a SMS with sensor data (460).

5. The method of claim 1 **characterized in that** the contextual analysis step comprises the steps consisting of:
- selecting an intermittent tracking mode or a destination tracking mode;
wherein said intermittent tracking mode consists of performing, at regular intervals, comparisons of successive geolocation data to determine one or more identical geolocations and, further to the determination of several successive identical geolocations, to launch alert detection;
wherein said destination tracking mode comprises the definition, by a user, of a destination, of a tolerable delay, RT, and of a tolerable deviation, ET, towards the destination, and the calculation in real time of the effective delay, RE, and the effective deviation, EE, and their respective comparison with RT and ET to trigger an alert processing procedure.

6. The method of claim 5 wherein the values of RT and ET are determined in profiles previously recorded in the mobile telephone.

7. The method according to claim 1 wherein the smartphone is combined with an amplifier and a satellite antenna, allowing voice and data satellite communication for processing the alert.

8. The method according to claim 1 wherein the smartphone is configured to allow communication via a Satellite protocol using the native antenna of the telephone, to establish satellite communication between two telephones in which the IMEI number of the telephone is used for the identification of the recipient - generally the call center - but also of the sender.

9. The method according to claim 7 wherein the application downloaded into the mobile phone carries out satellite communication by means of the following steps:
- after a network test, a class is invoked to process the sending of data by satellite, with the aim of taking control of the native antenna of the phone, in order to
- change frequency
- to synchronize by the frequency used by the satellite for sending an SMS to a second phone;
in which, following a change in frequency, the method uses a second class to send the SMS directly to the remote telephone

10. The method according to claim 7 wherein the smartphone is configured for transmitting and receiving - via satellite communication - an SMS with another identified smartphone, and to capture a fingerprint, voice or facial print prior to the communication.

11. A mobile data processing device, such as a smartphone, allowing wireless communication within a GSM type cellular network, said device comprising:
- a memory (110) for storing data and programs
- a processor (120) allowing the execution of applications and data processing,
- a display (130);
- a camera (140)
- a loudspeaker (150) associated with its amplifier circuit,
- a power supply (160)
- a block (170) comprising various interfaces, in particular a network interface (171) allowing wireless communication with various networks;
- a block (180) comprising multiple sensors making it possible to generate multiple information and signals representative of the environment of a user wherein the telephone is configured by means of a downloaded application for the implementation of the method described in the any of claims 1 to 10.

12. The method according to claim 1 wherein the detection of a "long press" is directly performed on the Volume key of an independent smartphone.

13. The method according to claim 1 wherein the application is configured for generating an automated voice message.

14. The method according to claim 1 wherein the application allows a user to speak to and to be understood by an interlocutor whatever his/her language, or through an instantaneous voice translation process.

15. The method according to claim 1 wherein the application recognizes the user's voice and thus allows certain identification of the user.
